# EUROPEAN PATENT APPLICATION

(11) **EP 1 518 716 A1**
(43) Date of publication of application: **30.03.2005**
(21) Application number: 03738133.2
(22) Date of filing: 27.06.2003
(51) Int. Cl.: B44C 5/04, B29C 39/12, B32B 27/08

(54) **METHOD OF PRODUCING TRANSLUCENT DECORATIVE PANELS AND PANELS THUS PRODUCED**

(30) Priority: 28.06.2002 ES 200201494
(71) Applicant: Mian, Alec, 08018 Barcelona (ES)
(72) Inventor: MIAN, Alec, E-08018 Barcelona (ES); CALLAHAN, Julie, E-08018 Barcelona (ES)
(74) Representative: Duran Moya, Luis-Alfonso
(86) International application number: PCT/ES2003/000320
(87) International publication number: WO 2004/002753

(57) **Abstract**

The method provides the pouring of a first layer of a highly transparent synthetic resin onto a substrate with a mirror finish and non-adhesive characteristics of a mould for moulding the panel, then arranging the individual decorative patterns on the upper face of the previously poured resin layer and subsequently arranging a laminar material in the form of a thin layer of a translucent nature which extends over the entire upper face of the transparent resin layer, and finally pouring the remainder of the resin layer making up the panel.

## Description

The present invention is intended to disclose a new method for producing artistic panels of the translucent type with original characteristics, from which its novelty and inventive step are derived.

The translucent panels according to the present invention are intended to comprise various artistic patterns in panels of reduced thickness which may be illuminated through the back face remote from the observed face, the artistic patterns contained in said panels standing out in a noteworthy manner.

The artistic patterns contained in the panels according to the present invention vary widely and include, for example, imprinted, photographic or painted patterns, manual drawings, animal, vegetable or mineral elements or elements of any other type embedded in the mass of the panel. In all cases, a basic characteristic of the panel according to the present invention is that the panel has translucent characteristics which, due to the action of a light source at the back, result in illumination which is uniform and well distributed over the entire panel without the light sources arranged in the back face, in other words the face remote from the observed face of the panel, being perceptible.

The panels according to the present invention are intended, in particular, to be attached by hanging in an invisible manner, in other words in such a way that the hanging means are not visible so the entire panel assembly has a uniform appearance.

Similarly, a further characteristic will involve leaving the edges of the panel completely free of marks, frames or the like so that, once it has been fitted with a specific spacing or separation from the wall, a halo effect may be achieved which is manifested by a floating appearance with respect to the wall.

The panels according to the present invention may basically be used in all cases where artistic panels that are usually combined with lighting systems are to be displayed, for example, wall-decorating panels, panels for ceiling light points replacing traditionally known lamps or any other devices which carry said panels in an easily replaceable arrangement to allow easy renewal of the artistic patterns.

A method is known in this field for producing light screens as well as illuminated advertising signs and signs of different types based on a resin that comprises, in its interior, visible patterns which are sandwiched between two layers of glass fibre cloth or of glass fibres arranged in a different way. However, this known method is cumbersome, and the appearance of the panel is unsatisfactory as it lacks the desirable uniform diffusion of the light.

The object of the present invention is precisely to provide panels which carry artistic patterns in which the patterns may be seen with total clarity from one of the faces of the panel, in other words the visible face, whereas the remainder of the panel material above and behind said decorative patterns has translucent characteristics over the entire expanse of the panel so the decorative patterns contained inside the panel are illuminated completely uniformly without the light sources on the back portion being seen.

The panels according to the present invention will therefore preferably comprise a first layer of synthetic resin, for example a completely transparent polyester resin, above which the decorative patterns of the desired pattern are incorporated and with the arrangement of a laminar layer with light-diffusing characteristics above said decorative patterns, the panel comprising, above said diffusing laminar layer, the remainder of the layer to make up the desired thickness of the translucent panel.

In a preferred embodiment, the transparent layer may have an approximate thickness of 0.5 to 5.0 mm, preferably of 1 mm, the front face being smooth with a mirror finish and the resin forming said layer being completely transparent, whereas the diffusion layer may be of the desired colour and thickness, for example paper which preferably has a weight of more than 200 g/m². The artistic patterns may be attached in the desired manner to the diffusing paper layer or may be produced by any known printing method on the actual layer of paper or other diffusing laminar element.

The back layer making up the panel may optionally be of the same nature as the resin used for the transparent visible layer or may optionally be of a different type, providing that it has the desired characteristics of transparency.

Production of the panels according to the present invention will comprise a first stage of moulding the lower visible layer of resin having highly transparent characteristics, moulding said layer on a base with a mirror finish such as polished marble, polished stainless steel, glass or other materials which produce a reflective surface intended to be reproduced in the visible face of the panel and which further has non-adhesive characteristics, owing to the actual characteristics of the material receiving the moulded layer or by the application of non-adhesive products to the surface of the receiving mould to prevent the visible layer of the panel adhering to the mould surface. After pouring the first layer of transparent resin with an approximate thickness of 1 mm, for example polyester resin, the graphic patterns are placed on said layer, for example directly using vegetable or animal elements, fragments of cloth or of paints or photos or of a different type, a laminar layer of reduced thickness of paper or other translucent material intended to diffuse the light, preferably a smooth paper preferably of uniform tonality with a weight preferably of more than 200 g/m² then being applied to the entire resin layer with elimination of intermediate blisters between said laminar layer of translucent paper and the front layer of the panel, the remainder of the resin making up the panel subsequently being moulded to form a panel of the desired thickness. The resin forming the remainder of the panel above the laminar layer of diffusing paper may be of the same nature as the visible layer or of a different type, affording the desired characteristics of transparency.

The further arrangement of a sheet of translucent material, for example paper or other material, so that the weight of the two combined layers will be more than approximately 200 g/m², also falls within the field of the invention.

Acetate sheets carrying a portion or all of the graphic patterns or patterns of a different type that are to be incorporated in the panel according to the invention may also be applied.

As mentioned hereinbefore, the layer of diffusing material, preferably paper, can in turn carry artistic patterns which are imprinted directly thereon or are attached in the most convenient manner, in which case the sheet of paper carrying the artistic patterns may be arranged directly on the first layer of transparent resin arranged inside the mould.

The expanse of the panels and the thickness thereof will vary within wide limits according to the characteristics desired in the panel, examples including rectangular shapes of approximately 40 to 70 cm per side, sometimes attaining dimensions of 80 to 200 cm in the case of a high panels associated, in particular, with the decoration of walls.

It is pointed out that for appropriate health reasons the present invention does not provide the use of cloths, yams or other materials of glass fibre.

The panels according to the present invention may form a portion of ceiling lighting elements, decorative elements for walls, table or standard lamps or many other types of application in which advantage may be taken of the artistic character of the panel with its perfectly uniform translucent nature which allows the perfect diffusion of light over its entire expanse without the light sources optionally located in the back portion of the panel being perceptible.

## Claims

1. Method for producing translucent artistic panels, **characterised in that** it comprises a first phase of pouring a first layer of a highly transparent synthetic resin onto a substrate with a mirror finish and non-adhesive characteristics of a mould for moulding the panel, then arranging the individual decorative patterns on the upper face of the previously poured resin layer and subsequently arranging a laminar material in the form of a thin layer of a translucent nature which extends over the entire upper face of the transparent resin layer, and finally pouring the remainder of the resin layer making up the panel until the desired thickness thereof is obtained and demoulding the panel once the resins have cured inside the mould.

2. Method according to claim 1, **characterised in that** the light-diffusing laminar material carries, on its face directed toward the laminar layer of transparent resin, the artistic patterns which are imprinted or attached in any way.

3. Method according to claim 1, **characterised in that** the laminar layer with a light-diffusing capacity consists of one or more layers of paper.

4. Method according to claim 3, **characterised in that** the layer of paper or combined layers of paper have a weight of more than 200 g/m².

5. Method according to claim 1, **characterised in that** the resin layer arranged on the light-diffusing laminar element consists of the same resin as the transparent layer.

6. Method according to claim 1, **characterised in that** the resin material used is a polyester resin.

7. Method according to claim 1, **characterised in that** the thickness of the transparent laminar layer is approximately between 0.5 and 5.0 mm, and is preferably 1 mm.

8. Method according to claim 1, **characterised in that** the thickness of the panel is approximately between 5 and 20 mm, and is preferably 10 mm.

9. Method according to claim 1, **characterised by** the arrangement of an intermediate acetate film carrying a portion or all of the graphic and/or literal patterns that are to be incorporated in the panel.

10. Translucent artistic panel produced in accordance with the method according to the preceding claims 1 to 9.
